# FASCICULE DE BREVET EUROPEEN

(11) **EP 0 726 188 B1**
(45) Date de publication et mention de la délivrance du brevet: **07.01.1999**
(21) Numéro de dépôt: 96101655.7
(22) Date de dépôt: 06.02.1996
(51) Int. Cl.: B60S 1/08, H02K 11/02

(54) **Motoréducteur, notamment pour l'entraînement d'un dispositif d'essuie-glace de véhicule**
Getriebemotor, insbesondere zum Antrieb eines Kraftfahrzeug-Scheibenwischers
Motor and reduction gear unit, notably for driving the windscreen wipers of a vehicle

(30) Priorité: 08.02.1995 FR 9501537
(43) Date de publication de la demande: 14.08.1996
(73) Titulaire: VALEO SYSTEMES D'ESSUYAGE, 78321 La Verrière (FR)
(72) Inventeur: Blanchet, Pierre, F-86140 Lencloitre (FR)
(74) Mandataire: Gamonal, Didier

(56) Documents cités:
- EP-A- 0 252 481
- WO-A-91/03856
- DE-A- 3 838 285
- DE-A- 4 116 100
- GB-A- 2 140 218

## Description

La présente invention concerne un motoréducteur, notamment pour l'entraînement d'un dispositif d'essuie-glace de véhicule.

Elle se rapporte plus particulièrement à un motoréducteur comportant un moteur électrique, notamment utilisé pour entraîner un système d'essuyage de véhicule automobile à deux vitesses différentes.

Dans un tel motoréducteur, il est généralement nécessaire de prévoir des moyens d'antiparasitage pour atténuer les perturbations électromagnétiques émises par le moteur durant son fonctionnement.

Dans l'état de la technique, les moyens d'antiparasitage utilisés sont généralement composés de deux bobines ou inductances, disposées chacune entre le balai de grande ou de petite vitesse et une source d'alimentation électrique du moteur, ainsi que de deux condensateurs connectés respectivement entre chaque balai et la masse.

Les inductances suppriment les émissions de bruit dans les fréquences de la bande FM (70 à 110 Mhz environ) ou dans des fréquences plus élevées tandis que les condensateurs suppriment les émissions de bruit dans les fréquences des ondes courtes (6 à 28 Mhz environ) et moyennes (0,5 à 1,6 MHz). Il est également connu de rajouter un troisième condensateur connecté entre les deux balais d'alimentation du moteur pour supprimer les émissions de bruit dans les plages de fréquences les plus basses, celles des ondes longues (150 à 300 kHz environ).

L'implantation de ces composants d'antiparasitage dans le carter du moteur pose un certain nombre de problèmes. En effet, dans l'état de la technique, lesdits composants sont souvent disposés sur la platine porte-charbons du moteur mais la place sur ladite platine est limitée.

De plus, les normes d'antiparasitage les plus récentes imposent de supprimer les émissions parasites jusqu'à des fréquences de 1 GHz environ car ces plages de fréquence élevées sont réservées maintenant à l'utilisation des radiotéléphones ou des téléphones cellulaires du type GSM.

Pour réaliser ces performances, il est nécessaire d'utiliser une bobine supplémentaire, montée en série avec la première bobine, pour chaque balai d'alimentation, en petite ou en grande vitesse, du moteur. Cette bobine supplémentaire augmente le nombre de composants et il devient quasiment impossible de tous les disposer sur la platine porte-charbons.

Il a déjà été proposé, notamment dans le document WO 91/03856, qui montre les caractéristiques du préambule de la revendication 1, de disposer les composants d'antiparasitage dans un logement du carter du réducteur, ledit logement étant fermé par la plaque de fermeture du carter du réducteur. Un inconvénient de cette solution vient du fait que le dimensionnement dudit logement, et donc également le dimensionnement des composants, doit être prévu dès la conception du carter du réducteur. Pour ne pas utiliser trop de place, les composants sont en général disposés en étant serrés les uns contre les autres ce qui peut les amener à se perturber mutuellement.

Une autre solution envisagée, notamment décrite dans le document DE-A-41 16 100, consiste à disposer les composants d'antiparasitage dans une cavité située du côté extérieur de la plaque de fermeture du carter du réducteur, ladite plaque de fermeture étant réalisée en plastique et la cavité contenant les composants d'antiparasitage étant recouverte par un couvercle également en matière plastique.

Un autre problème se pose lors de l'utilisation d'une telle solution car les composants eux-mêmes émettent des rayonnements parasites qui ne sont pas arrêtés par le boîtier en matière plastique. En effet, les composants reçoivent un signal contenant des bruits électromagnétiques à haute fréquence et ils se comportent comme des antennes en réémettant lesdits bruits électromagnétiques.

Un but principal de la présente invention est de résoudre les problèmes précités.

Elle propose à cet effet un motoréducteur, notamment pour l'entraînement d'un dispositif d'essuie-glace de véhicule, comportant un carter creux de réducteur fermé par une plaque de fermeture, dont au moins une partie de la surface tournée vers l'extérieur est électriquement conductrice, et comportant des composants électroniques, comme des moyens d'antiparasitage, disposés sur ladite partie électriquement conductrice de la surface extérieure de la plaque de fermeture, caractérisé en ce que les composants électroniques sont recouverts par un boîtier en forme de capot, en matériau électriquement conducteur, ledit boîtier comportant au moins un moyen de liaison électrique avec ladite partie électriquement conductrice de la surface extérieure de la plaque de fermeture.

Grâce au dispositif de l'invention, les rayonnements électromagnétiques émis par les composants d'antiparasitage sont retenus à l'intérieur de la cavité électriquement conductrice formée par le boîtier disposé sur la plaque de fermeture du réducteur.

Selon une autre caractéristique de l'invention, la plaque de fermeture est en un matériau métallique.

Selon une autre caractéristique de l'invention, le boîtier recouvrant les composants électroniques est en un matériau métallique.

Selon un autre aspect de l'invention, le boîtier est en un matériau synthétique, notamment du plastique, et il comporte une couche mince de matériau électriquement conducteur disposée à sa surface.

Selon un autre aspect de l'invention, la couche mince de matériau électriquement conducteur est disposée sur la surface intérieure du boîtier.

Selon un autre aspect de l'invention, un moyen de liaison électrique, entre le boîtier et la partie électriquement conductrice de la plaque de fermeture, est constitué par au moins une saillie rectiligne, disposée sur la surface extérieure électriquement conductrice de ladite plaque de fermeture, de telle sorte qu'elle soit en contact avec au moins une des parois latérales dudit boîtier.

Selon un autre aspect de l'invention, la plaque de fermeture comporte, sur sa surface extérieure, deux saillies rectilignes, sensiblement parallèles entre elles, disposées de telle sorte qu'elles soient en contact avec deux parois latérales du boîtier.

Selon un autre aspect de l'invention, les saillies rectilignes sont disposées à l'intérieur du boîtier.

Selon un autre aspect de l'invention, un moyen de liaison électrique, entre le boîtier et la partie électriquement conductrice de la plaque de fermeture, est constitué par une patte électriquement conductrice, issue du boîtier, et fixée sur ladite partie électriquement conductrice de la plaque de fermeture.

Selon un autre aspect de l'invention, les composants électroniques sont disposés sur une plaque, en matériau isolant, comportant des secteurs métalliques assurant les liaisons électriques entre lesdits composants.

Selon un autre aspect de l'invention, la plaque supportant les composants électroniques est disposée à l'intérieur du boîtier, et l'intérieur dudit boîtier est rempli d'une résine isolante de manière à ce que la plaque et les composants soient noyés dans ladite résine.

Selon un autre aspect de l'invention, un des secteurs métalliques de la plaque se prolonge, au delà de ladite plaque, en une patte comportant un alésage, ladite patte étant liée électriquement au boîtier.

Selon un autre aspect de l'invention, la plaque de fermeture comporte, au niveau de sa partie électriquement conductrice, un ergot percé d'un alésage dans lequel est adaptée à s'insérer une vis, de sorte que la patte du boîtier, comportant en outre un alésage, et la patte prolongeant un des secteurs métalliques, se trouvent en contact l'une avec l'autre, serrées entre ledit ergot et ladite vis.

L'invention concerne également un motoréducteur du type précité, comprenant en outre un moteur électrique dont l'enveloppe extérieure comporte une extrémité ouverte qui est recouverte par une pièce intermédiaire contenant une platine portant les balais d'alimentation dudit moteur, ladite pièce intermédiaire se raccordant au carter creux du réducteur, caractérisé en ce qu'au moins un des secteurs métalliques de la plaque se prolonge, au delà de ladite plaque, en une languette, insérée dans une ouverture de ladite pièce intermédiaire et sertie sur la platine portant les balais.

Selon un autre aspect de l'invention, le motoréducteur comporte un moteur électrique adapté pour entraîner un dispositif d'essuie-glace de véhicule à deux vitesses différentes. Il est caractérisé en ce que deux secteurs métalliques de la plaque se prolongent, au delà de ladite plaque, chacun en une languette, chacune desdites languettes étant insérée dans une ouverture de ladite pièce intermédiaire et sertie sur la platine portant les balais, de telle sorte que chaque languette soit liée électriquement avec chacun des balais d'alimentation, en grande et en petite vitesse, dudit moteur électrique.

D'autres caractéristiques et avantages de l'invention ressortiront de la description détaillée qui suit pour la compréhension de laquelle on se référera aux dessins annexés parmi lesquels:
- la figure 1 est une vue en perspective d'un motoréducteur selon l'invention;
- la figure 2 est une vue partiellement en coupe du motoréducteur de la figure 1;
- la figure 3 est un schéma global d'un dispositif de commande d'un système d'essuie-glace conforme à l'invention;
- la figure 4 est une vue de dessus d'un détail de la figure 1 dans laquelle on considère que le boîtier contenant les composants d'antiparasitage est transparent;
- la figure 5 est une vue, selon une coupe A, du détail de la figure 4;
- la figure 6 est une vue, selon une coupe B, du détail de la figure 4.

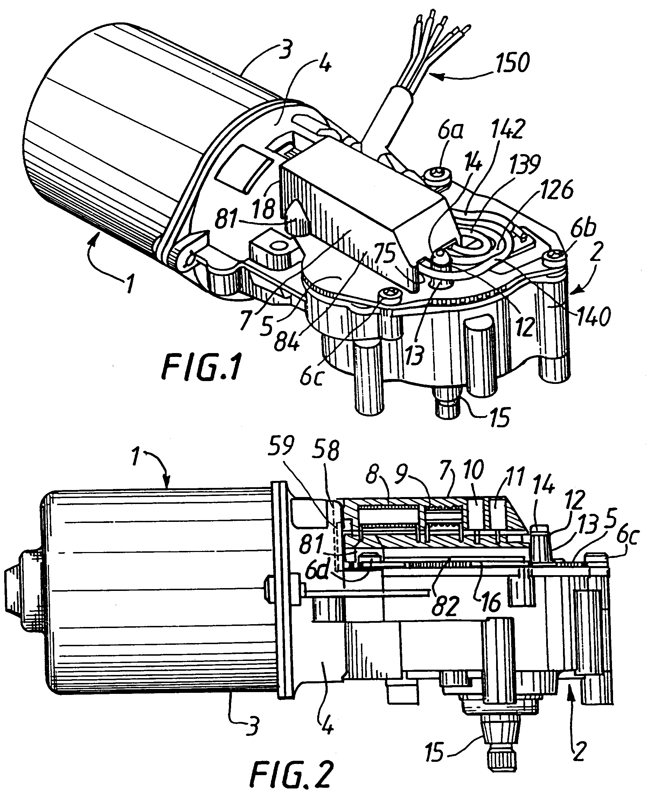

Sur les figures 1 et 2, on a représenté un motoréducteur, notamment pour l'entraînement d'un système d'essuie-glace, comprenant un moteur électrique 1, et un système de réduction (non visible) enfermé dans un carter creux 2.

Le moteur électrique 1 comprend une enveloppe extérieure 3 en forme générale de pot dont l'extrémité ouverte est recouverte par une pièce intermédiaire 4 contenant la platine qui porte les balais ou charbons d'alimentation du moteur (non représentés sur les figures 1 et 2).

Ladite pièce intermédiaire 4 se raccorde au carter creux 2 qui contient un système de réduction constitué comme cela est connu en soit de deux pignons de diamètres sensiblement égaux, entraînés en rotation par deux vis sans fin issues du rotor du moteur électrique et entraînant un troisième pignon, de diamètre supérieur aux deux premiers, et lié en rotation avec l'arbre de sortie 15 du système.

Le carter 2 est réalisé préférentiellement en matériau métallique et il est muni d'une plaque de fermeture 5, également réalisée en métal et liée audit carter par l'intermédiaire de vis 6a-6d.

Sur la face extérieure de ladite plaque de fermeture 5 est disposé un boîtier 7 en forme générale de parallélépipède rectangle. Ce boîtier contient, comme mieux visible sur la figure 2, des composants d'antiparasitage, par exemple des bobines 8, 9 et des condensateurs 10, 11.

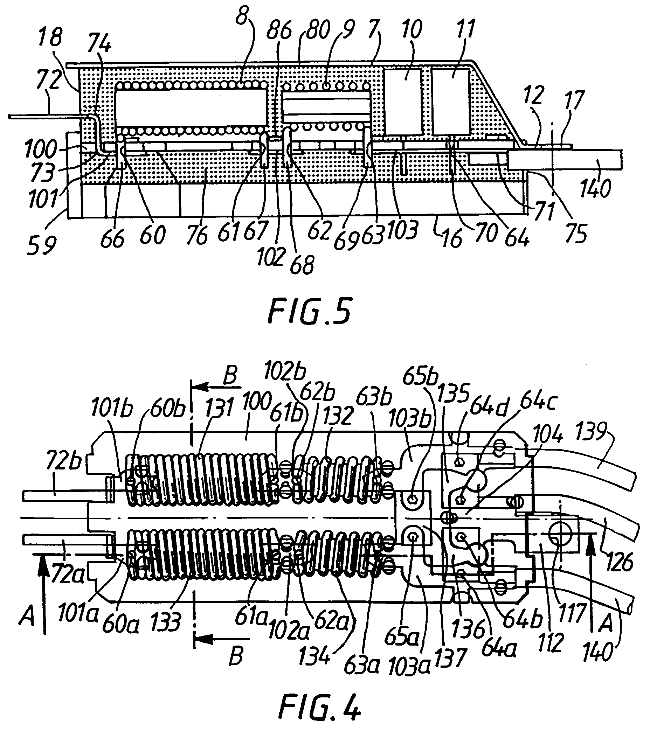

Le boîtier 7 présente une face creuse 16 (mieux visible sur la figure 5), celle située contre la plaque de fermeture 5 et il est réalisé en un matériau électriquement conducteur. Dans un mode de réalisation préféré, il est réalisé par découpage et pliage de tôle métallique.

Dans une variante de ce mode de réalisation, le boîtier 7 est réalisé en un matériau plastique et sa surface intérieure est recouverte d'une couche fine de métal, par exemple de l'aluminium, de manière à le rendre électriquement conducteur.

Le boîtier 7 est également ouvert sur sa face 18 située contre la pièce intermédiaire 4 et il comporte deux languettes, dont une 59 est visible à la figure 2 et à la figure 5, situées dans le prolongement des flans latéraux 84, 85 dudit boîtier.

La pièce intermédiaire 4 est réalisée en un matériau électriquement conducteur, préférentiellement du métal, et elle présente deux rainures, dont une est référencée 58, dans lesquelles viennent s'insérer les deux languettes 59 issues du boîtier 7 lorsque celui-ci est mis en place sur la plaque de fermeture 5.

Une liaison électrique directe entre la pièce 4 et le boîtier 7 est ainsi réalisée.

Ledit boîtier 7 présente une patte 12 venue de matière avec l'un des flans dudit boîtier. Cette patte a deux fonctions: elle sert de moyen de fixation du boîtier 7 sur la plaque de fermeture 5 et elle assure la continuité électrique entre ledit boîtier électriquement conducteur 7 et la plaque de fermeture en métal 5.

En effet, la plaque de fermeture 5 présente un ergot 13, venu de matière avec ladite plaque, percé d'un alésage fileté dans lequel est adaptée à s'insérer une vis 14. La position et la hauteur dudit ergot sont choisies de telle sorte que, lorsque le boîtier 7 est situé dans sa position finale sur la plaque de fermeture 5, la patte 12 est à la hauteur de la surface supérieure de l'ergot 13.

La patte 12 présente en outre un alésage 17 (mieux visible à la figure 5) dans lequel est adaptée à s'insérer la vis 14 avant d'être vissée dans l'alésage de l'ergot 13, ladite patte 12 se trouvant, en position finale, serrée entre l'ergot 13 et ladite vis.

De plus, le boîtier 7 est fixé sur le motoréducteur en un deuxième point de fixation, situé à l'opposé de la patte 12, et qui sera décrit ultérieurement.

On peut remarquer que le boîtier 7 présente une forme 81 en saillie sur l'une 84 de ses parois latérales. Cette forme permet d'entourer la vis 6d de fixation de la plaque de fermeture 5 sur le carter du réducteur, et ainsi de positionner plus facilement le boîtier 7 sur ladite plaque de fermeture.

D'autre part, en se reportant à la figure 6, la plaque de fermeture 5 présente deux saillies rectilignes 82, 83, dont une est également visible à la figure 2. Lesdites saillies sont sensiblement parallèles entre elles et sont disposées de telle sorte que lorsque le boîtier 7 est mis en place sur ladite plaque de fermeture 5, les deux saillies 82 et 83 se trouvent à l'intérieur du boîtier 7, contre les parois latérales, respectivement 84 et 85, dudit boîtier, et en contact électrique avec elles.

La continuité électrique entre le boîtier 7 et la plaque de fermeture 5 est donc assurée tout le long des parois latérales 84, 85.

Ainsi, le boîtier 7, lorsqu'il est fixé sur la plaque de fermeture 5, constitue, avec ladite plaque qui vient fermer la face creuse 16 dudit boîtier, et avec la pièce intermédiaire 4 qui vient fermer la face ouverte 18, une cage électriquement conductrice, dite cage de Farraday, dont le potentiel est celui du carter du réducteur, c'est à dire la masse prise sur la carrosserie du véhicule.

Les rayonnements électromagnétiques susceptibles d'être émis par les composants 8-11 d'antiparasitage lors du fonctionnement du moteur sont donc emprisonnés dans cette cage électriquement conductrice et ne peuvent donc pas perturber l'environnement extérieur du motoréducteur. Le but de l'invention est donc atteint.

Les autres éléments de la figure 6, qui sont également visibles sur les figure 4 et 5, seront décrits ultérieurement.

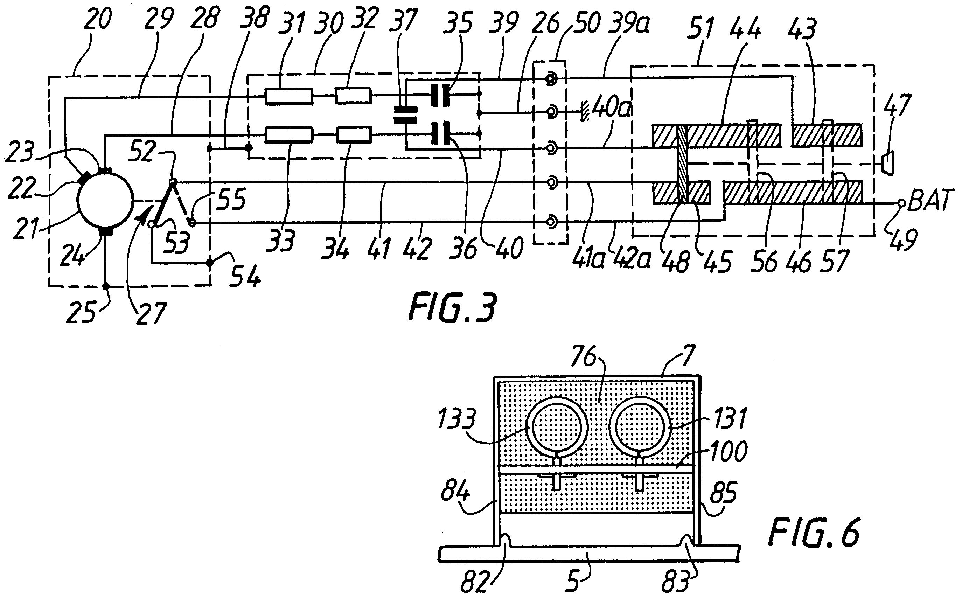

Sur la figure 3, on a représenté un schéma du module de commande d'un dispositif d'essuie-glace.

Le motoréducteur, schématisé par le bloc en pointillés 20, comprend un moteur électrique 21 pouvant tourner à deux vitesses différentes suivant qu'il est alimenté par le charbon 22 (grande vitesse) ou 23 (petite vitesse). Ledit moteur comporte un troisième charbon 24, relié en 25 à la carcasse du boîtier du motoréducteur qui est elle-même reliée à la masse par les fils 38 et 26.

Le bloc 20 comporte également un interrupteur 27 de commande de l'arrêt du moteur, constitué habituellement et comme cela est connu en soit par un mécanisme non représenté de frotteurs propres à coopérer avec des pistes circulaires concentriques rotatives disposées sur le dernier pignon du système réducteur et entraînées en rotation avec celui-ci.

Des fils 28 et 29 relient respectivement les charbons 23 et 22 à un module 30 correspondant au boîtier 7 représenté aux figures 1 et 2. Le fil 28 (respectivement 29) est relié à deux inductances 33 et 34 (respectivement 31 et 32) en série, elles-mêmes connectées à une première borne d'un condensateur 36 (respectivement 35) dont la deuxième borne est reliée à la carcasse du boîtier 30, lui-même relié à la masse par le fil 26.

Un condensateur 37 est disposé entre les deux premières bornes des condensateurs 35 et 36 et deux fils 39 et 40, également connectés respectivement auxdites premières bornes des condensateurs 35 et 36, sortent du boîtier 30 pour être reliés à un connecteur 50.

Les composants 31-37 précédemment décrit réalisent le filtrage des signaux électriques circulant dans les fils d'alimentation 28 et 29 du moteur électrique 21 en empêchant les émissions de bruit parasite dans différentes plages de fréquences.

Le boîtier 30 englobant les composants d'antiparasitage 31-37 est relié à la carcasse du motoréducteur, schématisé par le bloc 20, par le fil 38. Ainsi, les deux blocs 20 et 30 sont reliés à la masse par le fil 26, qui est lui-même également relié au connecteur 50.

Il est à noter que les fils 26, 39 et 40 sortant du bloc 30, correspondent, sur la figure 1, aux fils 126, 139 et 140 issus du boîtier 7.

Les fils 41 et 42, issus de l'interrupteur de commande de l'arrêt du moteur et reliés au connecteur 50, sont également partiellement visibles sur la figure 1 sous la référence 142. L'ensemble des cinq fils reliés au connecteur 50 schématisé sur la figure 3 correspond donc à l'ensemble de fils portant la référence 150 visible sur la figure 1.

En se reportant à nouveau à la figure 3, on va maintenant décrire le fonctionnement du module de commande.

Les fils 39-42 reliés au connecteur 50 présentent des fils symétriques 39a-42a qui sont reliés respectivement aux plaques de contact 43-46 d'un commutateur manuel 51.

Ledit commutateur 51 comporte une manette 47 reliée à une barre conductrice 48, disposée perpendiculairement aux plaques de contacts 43-46. Lesdites plaques de contacts 43-46 sont disposées en deux files de deux contacts 43, 44 et 45, 46 et la barre conductrice 48 est de longueur telle qu'elle peut mettre en contact respectivement les plaques de contacts 44 et 45,44 et 46 ou 43 et 46.

Dans une première position de la barre 48, représentée en traits pleins à la figure 3, une liaison électrique est établie entre les plaques de contact 44 et 45. La plaque de contact 44 est reliée, par les fils 40a et 40, au charbon d'alimentation en petite vitesse 23 du moteur électrique 21 et la plaque de contact 45 est reliée, par les fils 41a et 41, à une borne 52 de l'interrupteur 27.

L'interrupteur 27 comporte deux autres bornes 53 et 55 qui peuvent alternativement être en contact avec la borne 52. La borne 53 est reliée à la masse sur la carcasse du motoréducteur au point référencé 54 tandis que la borne 55 est reliée à la plaque de contact 46 du commutateur 51, par les fils 42 et 42a, ladite plaque de contact 46 étant elle-même reliée à une source d'alimentation électrique, par exemple la batterie 49 du véhicule.

Lorsque l'interrupteur 27 établit une liaison électrique entre les bornes 52 et 55, la plaque de contact 45 se trouve ainsi reliée à la source d'alimentation électrique 49, donc le charbon 23 du moteur électrique 21 est alimenté. Par conséquent, le moteur tourne à petite vitesse. Dès que l'interrupteur 27 met en contact les bornes 52 et 53, en pratique dès que le moteur a atteint la position voulu d'arrêt de l'essuie-glace, la plaque de contact 45 se trouve reliée à la masse, donc le charbon 23 du moteur électrique est également relié à la masse et l'induit du moteur électrique se trouve en court-circuit sur lui-même. Le moteur s'arrête donc de tourner.

La première position de la barre conductrice 48 correspond donc à la position d'arrêt des essuie-glace du commutateur 51.

Dans une deuxième position de la barre 48, représentée en traits pointillés 56 à la figure 3, une liaison électrique est établie entre les plaques de contact 44 et 46. La plaque de contact 46 étant reliée à la source d'alimentation 49, et la plaque 44 au charbon d'alimentation 23 du moteur électrique, ledit moteur tourne ainsi à petite vitesse.

La deuxième position de la barre conductrice 48 correspond donc, sur le commutateur 51, à la mise en marche en petite vitesse des essuie-glace.

Dans une troisième position de la barre 48, représentée en traits pointillés 57 à la figure 3, une liaison électrique est établie entre les plaques de contact 43 et 46. La plaque de contact 46 étant reliée à la source d'alimentation 49, et la plaque 43 au charbon d'alimentation 22 du moteur électrique, ledit moteur tourne ainsi à grande vitesse.

La troisième position de la barre conductrice 48 correspond donc, sur le commutateur 51, à la mise en marche à grande vitesse des essuie-glace.

En se reportant aux figures 4 et 5, le boîtier 7 contenant les composants d'antiparasitage va maintenant être décrit plus en détails.

La figure 5 montre ledit boîtier 7 avant son montage sur la plaque de fermeture du carter du réducteur.

Des composants, bobines 8, 9 et condensateurs 10, 11, sont disposés sur une plaque 100, mieux visible à la figure 4, de forme sensiblement rectangulaire, et réalisée en matériau isolant.

La plaque 100 comporte des secteurs métalliques 101, 102, 103 qui sont appliqués sur la face de ladite plaque opposée par rapport à celle où sont disposés les composants d'antiparasitage et sont fixés sur ladite plaque par des sertissages, notamment 86.

Les secteurs métalliques sont également visibles à la figure 4 dans laquelle on considère que la plaque 100 est transparente, sous les références 101a, 101b, 102a, 102b, 103a, 103b, et 104.

En se référant à la figure 5, lesdits secteurs métalliques sont percés d'alésages 60-64 destinés au passage de pattes 66-70 des composants 8, 9 et 11 d'antiparasitage. Le moyen de fixation des composants, comme les bobines 8,9, sur la plaque 100 est donc le suivant: on insère les pattes 66, 67 (respectivement 68, 69) de la bobine 8 (respectivement 9) dans les alésages 60, 61 (respectivement 62,63), puis on vient souder à la vague lesdites pattes sur les secteurs métalliques 101, 102 et 103. Ceci assure la fixation des composants et la liaison électrique entre les pattes et les secteurs métalliques.

Ainsi, les pattes 67, de la bobine 8, et 68, de la bobine 9, qui sont toutes deux reliées au secteur métallique 102, sont reliées électriquement entre elles.

Les condensateurs 10 et 11 sont fixés de la même manière sur la plaque 100.

En se reportant à la figure 4, on a représenté des bobines 131 et 133 qui comportent des spires jointives et sont destinées à filtrer les fréquences de la bande FM et des ondes courtes. Elles correspondent, sur le schéma fonctionnel de la figure 3, aux bobines 31 et 33 qui filtrent les signaux d'alimentation des charbons 22 et 23 du moteur électrique.

Deux autres bobines 132 et 134 sont également représentées. Elles comportent moins de spires que les bobines 131 et 133 et leurs spires ne sont pas jointives. Ces bobines sont destinées à filtrer les fréquences supérieures à celles de la bande FM.

Les bobines 132 et 134 correspondent aux bobines 32 et 34 du schéma fonctionnel de la figure 3.

De même, trois condensateurs 135, 136 et 137 qui sont représentés sur la figure 4, correspondent respectivement aux condensateurs 35, 36 et 37 du schéma fonctionnel de la figure 3.

Les liaisons électriques qui sont figurées à la figure 3 sont réalisées, sur le dispositif de la figure 4, par les secteurs métalliques 101a à 104 sur lesquels sont soudées les pattes des composants.

Ainsi, la bobine 131 (respectivement 133) comporte une première patte qui est insérée dans l'alésage 60b (respectivement 60a) du secteur métallique 101b (respectivement 101a) et une deuxième patte qui est insérée dans l'alésage 61b (respectivement 61a) du secteur métallique 102b (respectivement 102a). Une première patte de la bobine 132 (respectivement 134) est insérée dans un deuxième alésage 62b (respectivement 62a) dudit secteur métallique 102b (respectivement 102a) et la deuxième patte de ladite bobine 132 (respectivement 134) est insérée dans un alésage 63b (respectivement 63a) du secteur métallique 103b (respectivement 103a).

Le secteur métallique 103b comporte un deuxième alésage 65b dans lequel est insérée une première patte du condensateur 137, la deuxième patte dudit condensateur étant insérée dans un deuxième alésage 65a du secteur métallique 103a.

Le condensateur 135 (respectivement 136) comporte une première patte insérée dans un troisième alésage 64d (respectivement 64a) du secteur métallique 103b (respectivement 103a) et une deuxième patte insérée dans un alésage 64c (respectivement 64b) du secteur métallique 104.

Ledit secteur métallique 104 permet donc de relier électriquement les deuxièmes pattes des deux condensateurs 135 et 136 et il est lui-même en contact électriquement avec la patte 12 de mise à la masse du boîtier 7 sur la plaque de fermeture du carter du réducteur.

En effet, ledit secteur métallique 104 se prolonge, au delà de la plaque isolante 100, en une patte 112, de forme et de dimension identique à celles de la patte 12 du boîtier 7, et présentant un alésage 117 de même diamètre que l'alésage 17 de ladite patte 12. Il est en outre prévu que lorsque la plaque 100 est logée dans le boîtier 7, au stade final de son montage, la patte 112 et la patte 12 soient en contact l'une avec l'autre sur toute leur surface et que les alésages 17 et 117 soient concentriques.

Ainsi, lorsque, le boîtier 7 est fixé par la patte 12 à l'ergot 13 de la plaque de fermeture 5, ce sont en fait la patte 12 et la patte 112 qui se trouvent serrées entre ledit ergot et la vis 14.

Le secteur métallique 104, prolongé par la patte 112, est donc en contact électriquement avec la masse prise sur la plaque de fermeture du carter du réducteur.

De plus, des fils 139, 126 et 140 sont soudés respectivement aux secteurs métalliques 103b, 104 et 103a, lesdits fils, correspondants aux fils 39, 26 et 40, étant dirigés ensuite vers le connecteur 50 décrit à la figure 3.

Sur la figure 5, seul le fil 140 est visible et il est soudé en 71 au secteur métallique 103, situé lui-même à une extrémité de la plaque 100 supportant les composants d'antiparasitage.

A l'autre extrémité de ladite plaque 100 se trouve le secteur métallique 101, correspondant aux secteurs 101a et 101b de la figure 4, ledit secteur 101 se prolongeant par une languette 72 qui présente deux coudes 73 et 74 lui permettant de sortir du boîtier 7 en étant au dessus du niveau de la plaque 100 (en considérant la figure 5).

En se reportant à la figure 4, on peut noter qu'il existe en fait deux languettes 72a et 72b dans le prolongement respectivement des secteurs métalliques 101a et 101b. Lesdites languettes 72a et 72b sont destinées à être reliées aux fils d'alimentations 28 et 29 des charbons du moteur électrique 21 représenté à la figure 3.

Le montage du boîtier 7 de la figure 5 va maintenant être décrit. On commence par fixer les secteurs métalliques 101a-104 sur la plaque 100 par sertissage, puis les composants d'antiparasitage 131-137 sont soudés, au niveau desdits secteurs métalliques, sur la plaque 100, et enfin, les fils 126, 139, 140 de connexion avec le système de commande sont soudés sur les secteurs métalliques respectivement 104, 103b et 103a. A ce stade du montage, on obtient la plaque 100 telle qu'elle est visible à la figure 4.

L'étape suivante consiste à insérer ladite plaque munie de ses composants à l'intérieur du boîtier 7, les composants d'antiparasitage étant tournés vers le fond 80 dudit boîtier et leurs pattes étant dirigées vers la face ouverte 16 du boîtier 7. Il est à noter que l'épaisseur dudit boîtier est largement supérieure à celle de la plaque 100 munie de ses composants. D'autre part, il est prévu une ouverture 75 (visible sur les figures 1 et 5) à une extrémité du boîtier 7, destinée au passage des fils de connexion 126, 139 et 140, ainsi qu'une ouverture pour le passage des languettes 72a, 72b (non visible sur les figures) à l'autre extrémité du boîtier 7. La plaque 100 est positionnée à l'intérieur du boîtier 7 de manière à ce que la patte 112 dépassant de ladite plaque vienne en appui sur la patte 12 dudit boîtier.

L'intérieur du boîtier 7 est ensuite rempli de résine isolante 76 jusqu'à un niveau tel que la plaque 100 et les composants d'antiparasitage, y compris leurs pattes, soient noyés dans ladite résine. Cette résine a deux fonctions principales: premièrement celle de maintenir les composants et la plaque 100 en place dans ledit boîtier, et deuxièmement celle d'assurer l'étanchéité du dispositif.

A ce stade du montage, le boîtier 7, tel qu'il est représenté à la figure 5, est complet. Il est prêt à être monté sur la plaque de fermeture 5 du carter du réducteur.

Le boîtier 7 est fixé sur la plaque de fermeture 5, d'une part par la patte 12 et la patte 112 qui sont vissées sur l'ergot 13 comme cela a déjà été décrit précédemment, et d'autre part, par les languettes 72a et 72b qui sont insérées dans une ouverture de la pièce intermédiaire 4 et sont soudées sur la platine portant les charbons (non représentée). Les languettes 72a, 72b sont soudées de telle sorte que la continuité électrique soit assurée entre chacune des deux languettes et chaque charbon d'alimentation en petite et en grande vitesse (non représentés) du moteur électrique de manière à assurer les liaisons électriques représentées par les fils 28 et 29 à la figure 3.

Le boîtier contenant les composants d'antiparasitage qui vient d'être décrit, présente en outre l'avantage de s'intégrer facilement sur un motoréducteur puisqu'il est entièrement monté de manière indépendante et n'est fixé sur le motoréducteur qu'au stade final de l'assemblage de ce dernier.

Il est bien entendu que le dispositif ci-dessus décrit n'est aucunement limitatif et pourra donner lieu à toute modification désirables sans sortir pour cela du cadre de l'invention.

## Revendications

1. Motoréducteur, notamment pour l'entraînement d'un dispositif d'essuie-glace de véhicule, comportant un carter creux (2) de réducteur fermé par une plaque de fermeture (5), dont au moins une partie de la surface tournée vers l'extérieur est électriquement conductrice, et comportant des composants électroniques (8-11), comme des moyens d'antiparasitage, disposés sur ladite partie électriquement conductrice de la surface extérieure de la plaque de fermeture, caractérisé en ce que les composants électroniques (8-11) sont recouverts par un boîtier (7) en forme de capot, en matériau électriquement conducteur, ledit boîtier comportant au moins un moyen de liaison électrique avec ladite partie électriquement conductrice de la surface extérieure de la plaque de fermeture.

2. Motoréducteur selon la revendication 1, caractérisé en ce que la plaque de fermeture (5) est en un matériau métallique.

3. Motoréducteur selon l'une des revendications 1 ou 2, caractérisé en ce que le boîtier (7) recouvrant les composants électroniques est en un matériau métallique.

4. Motoréducteur selon l'une des revendications 1 ou 2, caractérisé en ce que le boîtier (7) est en un matériau synthétique, notamment du plastique, et en ce qu'il comporte une couche mince de matériau électriquement conducteur disposée à sa surface.

5. Motoréducteur selon la revendication 4, caractérisé en ce que la couche mince de matériau électriquement conducteur est disposée sur la surface intérieure du boîtier (7).

6. Motoréducteur selon l'une des revendications précédentes, caractérisé en ce qu'un moyen de liaison électrique, entre le boîtier (7) et la partie électriquement conductrice de la plaque de fermeture (5), est constitué par au moins une saillie rectiligne (82), disposée sur la surface extérieure électriquement conductrice de ladite plaque de fermeture, de telle sorte qu'elle soit en contact avec au moins une des parois latérales (84) dudit boîtier (7).

7. Motoréducteur selon la revendication 6, caractérisé en ce que la plaque de fermeture (5) comporte, sur sa surface extérieure, deux saillies rectilignes (82, 83), sensiblement parallèles entre elles, disposées de telle sorte qu'elles soient en contact avec deux parois latérales (84, 85) du boîtier (7).

8. Motoréducteur selon la revendication 7, caractérisé en ce que les saillies rectilignes sont disposées à l'intérieur du boîtier (7).

9. Motoréducteur selon la revendication 1, caractérisé en ce qu'un moyen de liaison électrique, entre le boîtier (7) et la partie électriquement conductrice de la plaque de fermeture (5), est constitué par une patte (12) électriquement conductrice, issue du boîtier (7), et fixée sur ladite partie électriquement conductrice de la plaque de fermeture (5).

10. Motoréducteur selon la revendication 1, caractérisé en ce que les composants électroniques (8-11, 131-137) sont disposés sur une plaque (100), en matériau isolant, comportant des secteurs métalliques (101-104) assurant les liaisons électriques entre lesdits composants.

11. Motoréducteur selon la revendication 10, caractérisé en ce que la plaque (100) supportant les composants électroniques (8-11, 131-137) est disposée à l'intérieur du boîtier (7), et en ce que l'intérieur dudit boîtier (7) est rempli d'une résine isolante (76) de manière à ce que la plaque (100) et les composants (8-11, 131-137) soient noyés dans ladite résine.

12. Motoréducteur selon la revendication 11, caractérisé en ce qu'un des secteurs métalliques (104) de la plaque (100) se prolonge, au delà de ladite plaque (100), en une patte (112) comportant un alésage (117), ladite patte étant liée électriquement au boîtier (7).

13. Motoréducteur selon la revendication 12 prise en combinaison avec la revendication 9, caractérisé en ce que la plaque de fermeture (5) comporte, au niveau de sa partie électriquement conductrice, un ergot (13) percé d'un alésage dans lequel est adaptée à s'insérer une vis (14), et en ce que la patte (12) du boîtier (7), comportant en outre un alésage (17), et la patte (112), se trouvent en contact l'une avec l'autre, serrées entre ledit ergot (13) et ladite vis (14).

14. Motoréducteur selon l'une des revendications 10 à 13, comprenant en outre un moteur électrique (1) dont l'enveloppe extérieure (3) comporte une extrémité ouverte qui est recouverte par une pièce intermédiaire (4) contenant une platine portant les balais d'alimentation dudit moteur, ladite pièce intermédiaire se raccordant au carter creux (2) du réducteur, caractérisé en ce qu'au moins un des secteurs métalliques (101) de la plaque (100) se prolonge, au delà de ladite plaque (100), en une languette (72), insérée dans une ouverture de ladite pièce intermédiaire (4) et soudée sur la platine portant les balais.

15. Motoréducteur selon l'une des revendications 10 à 14, comportant un moteur électrique adapté pour entraîner un dispositif d'essuie-glace de véhicule à deux vitesses différentes, caractérisé en ce que deux secteurs métalliques (101a, 101b) de la plaque (100) se prolongent, au delà de ladite plaque (100), chacun en une languette (72a, 72b), chacune desdites languettes étant insérée dans une ouverture de ladite pièce intermédiaire (4) et soudée sur la platine portant les balais, de telle sorte que chaque languette soit liée électriquement avec chacun des balais d'alimentation, en grande et en petite vitesse, dudit moteur électrique.

## Claims

1. A motorised speed-reducing drive unit, especially for driving a vehicle screen wiper apparatus, comprising a hollow gearbox casing (2) closed by a closure plate (5), at least a portion of the external surface of which is electrically conductive, and including electronic components (8 - 11) such as antiparasitic components, which are disposed on the said electrically conductive portion of the external surface of the closure plate, characterised in that the electronic components (8 - 11) are enclosed by a cap-shaped housing (7) of electrically conductive material, the said housing including at least one means for electrical connection with the said electrically conductive portion of the external surface of the closure plate.

2. A drive unit according to Claim 1, characterised in that the closure plate (5) is of a metallic material.

3. A drive unit according to Claim 1 or Claim 2, characterised in that the housing (7) enclosing the electronic components is of a metallic material.

4. A drive unit according to Claim 1 or Claim 2, characterised in that the housing (7) is of a synthetic material, especially plastics, and in that it has a thin layer of electrically conductive material disposed on its surface.

5. A drive unit according to Claim 4, characterised in that the thin electrically conductive layer is disposed on the internal surface of the housing (7).

6. A drive unit according to one of the preceding Claims, characterised in that a means for making electrical connection between the housing (7) and the electrically conductive portion of the closure plate (5) comprises at least one rectilinear projection (82) disposed on the electrically conductive external surface of the said closure plate, in such a way that it is in contact with at least one of the side walls (84) of the said housing (7).

7. A drive unit according to Claim 6, characterised in that the closure plate (5) has on its outer surface two rectilinear projections (82, 83), substantially parallel to each other and so disposed that they are in contact with two side walls (84, 85) of the housing (7).

8. A drive unit according to Claim 7, characterised in that the rectilinear projections are disposed inside the housing (7).

9. A drive unit according to Claim 1, characterised in that a means for electrically connecting the housing (7) with the electrically conductive portion of the closure plate (5) comprises an electrically conductive lug (12) projecting from the housing (7) and fixed on the said electrically conductive portion of the closure plate (5).

10. A drive unit according to Claim 1, characterised in that the electronic components (8 - 11, 131 - 137) are disposed on a plate (100) of insulating material including metallic sectors (101 - 104) which provide electrical connections between the said components.

11. A drive unit according to Claim 10, characterised in that the plate (100) carrying the electronic components (8 - 11, 131 - 137) is disposed inside the housing (7), and in that the interior of the said housing (7) is filled with an insulating resin (76) so that the plate (100) and the components (8 - 11, 131 - 137) are encapsulated in the said resin.

12. A drive unit according to Claim 11, characterised in that one of the metallic sectors (104) of the plate (100) is extended, beyond the said plate (100), by a lug (112) having a hole (117), the said lug being connected electrically to the housing (7).

13. A drive unit according to Claim 12 in combination with Claim 9, characterised in that the closure plate (5) includes, in its electrically conductive portion, a support post (13) having a through hole in which a screw (14) is adapted to be inserted, and in that the lug (12) of the housing, having a further hole (17), and the lug (112), are in contact with each other, being clamped between the said support post (13) and the said screw (14).

14. A drive unit according to one of Claims 10 to 13, further including an electric motor (1) having an external casing (3) that includes one open end which is covered by an intermediate member (4) which contains a support plate carrying the power supply brushes of the said motor, the said intermediate member being joined to the hollow gearbox casing (2), characterised in that at least one of the metallic sectors (101) of the plate (100) is extended beyond the said plate (100) by a tongue (72) inserted in an aperture in the said intermediate member (4) and soldered on the support plate that carries the brushes.

15. A drive unit according to one of Claims 10 to 14, including an electric motor arranged for driving a vehicle screen wiper apparatus at two different speeds, characterised in that each of two metallic sectors (101a, 101b) of the plate (100) is extended beyond the said plate (100) by a tongue (72a, 72b), with each said tongue being inserted in an aperture in the said intermediate member (4) and soldered on the plate that carries the brushes, in such a way that each tongue is electrically connected to each of the high-speed and low-speed power supply brushes of the said electric motor.

## Patentansprüche

1. Getriebemotor, insbesondere zum Antrieb eines Kraftfahrzeug-Scheibenwischers, umfassend ein hohles Getriebegehäuse (2), das durch eine Verschlußplatte (5) verschlossen ist, von der zumindest ein Teil der nach außen gerichteten Fläche elektrisch leitend ist, und umfassend elektronische Bauelemente (8-11), wie Entstörungsmittel, die auf dem besagten elektrisch leitenden Teil der Außenfläche der Verschlußplatte angeordnet sind,**dadurch gekennzeichnet**, daß die elektronischen Bauelemente (8-11) durch ein Gehäuse (7) in Form einer Abdeckhaube aus elektrisch leitendem Material abgedeckt sind, wobei das besagte Gehäuse mindestens ein Mittel zur elektrischen Verbindung mit dem besagten elektrisch leitenden Teil der Außenfläche der Verschlußplatte umfaßt.

2. Getriebemotor nach Anspruch 1, **dadurch gekennzeichnet,** daß die Verschlußplatte (5) aus einem metallischen Werkstoff ausgeführt ist.

3. Getriebemotor nach einem der Ansprüche 1 oder 2, **dadurch gekennzeichnet,** daß das Gehäuse (7), das die elektronischen Bauelemente abdeckt, aus einem metallischen Werkstoff ausgeführt ist.

4. Getriebemotor nach einem der Ansprüche 1 oder 2, **dadurch gekennzeichnet,** daß das Gehäuse (7) aus einem Kunststoff, insbesondere aus einem Plastwerkstoff, ausgeführt ist und daß es eine dünne Schicht aus elektrisch leitendem Material aufweist, die an seiner Oberfläche angeordnet ist.

5. Getriebemotor nach Anspruch 4, **dadurch gekennzeichnet,** daß die dünne Schicht aus elektrisch leitendem Material auf der Innenfläche des Gehäuses (7) angeordnet ist.

6. Getriebemotor nach einem der vorangehenden Ansprüche, **dadurch gekennzeichnet**, daß ein Mittel zur elektrischen Verbindung zwischen dem Gehäuse (7) und dem elektrisch leitenden Teil der Verschlußplatte (5) aus mindestens einem geradlinigen Vorsprung (82) besteht, der auf der elektrisch leitenden Außenfläche der besagten Verschlußplatte angeordnet ist, so daß er mit mindestens einer der Seitenwände (84) des besagten Gehäuses (7) in Kontakt steht.

7. Getriebemotor nach Anspruch 6, **dadurch gekennzeichnet,** daß die Verschlußplatte (5) auf ihrer Außenfläche zwei zueinander in etwa parallele geradlinige Vorsprünge (82, 83) umfaßt, die so angeordnet sind, daß sie mit zwei Seitenwänden (84, 85) des Gehäuses (7) in Kontakt stehen.

8. Getriebemotor nach Anspruch 7, **dadurch gekennzeichnet,** daß die geradlinigen Vorsprünge im Innern des Gehäuses (7) angeordnet sind.

9. Getriebemotor nach Anspruch 1, **dadurch gekennzeichnet,** daß ein Mittel zur elektrischen Verbindung zwischen dem Gehäuse (7) und dem elektrisch leitenden Teil der Verschlußplatte (5) aus einem elektrisch leitenden Ansatz (12) besteht, der aus dem Gehäuse (7) herausgearbeitet und an dem besagten elektrisch leitenden Teil der Verschlußplatte (5) befestigt ist.

10. Getriebemotor nach Anspruch 1,**dadurch gekennzeichnet,** daß die elektronischen Bauelemente (8-11, 131-137) auf einer Platte (100) aus nichtleitendem Material angeordnet sind, die Metallsegmente (101-104) zur Herstellung der elektrischen Verbindungen zwischen den besagten Bauelementen umfaßt.

11. Getriebemotor nach Anspruch 10 , **dadurch gekennzeichnet,** daß die Platte (100), die die elektronischen Bauelemente (8-11, 131-137) trägt, im Innern des Gehäuses (7) angeordnet ist und daß das Innere des Gehäuses (7) mit einem Isolierharz (76) befüllt ist, so daß die Platte (100) und die Bauelemente (8-11, 131-137) in das besagte Harz eingelassen sind.

12. Getriebemotor nach Anspruch 11 , **dadurch gekennzeichnet,** daß eines der Metallsegmente (104) der Platte (100) über die besagte Platte (100) hinaus durch einen Ansatz (112) verlängert wird, der eine Bohrung (117) enthält, wobei der besagte Ansatz elektrisch mit dem Gehäuse (7) verbunden ist.

13. Getriebemotor nach Anspruch 12 in Kombination fit Anspruch 9 , **dadurch gekennzeichnet,** daß die Verschlußplatte (5) in Höhe ihres elektrisch leitenden Teils eine Nase (13) mit einer Bohrung umfaßt, in die eine Schraube (14) eingesetzt werden kann, und daß sich der Ansatz (12) des Gehäuses (7), der außerdem eine Bohrung (17) enthält, und der Ansatz (112) miteinander in Kontakt befinden, indem sie zwischen der besagten Nase (13) und der besagten Schraube (14) eingespannt sind.

14. Getriebemotor nach einem der Ansprüche 10 bis 13, der außerdem einen Elektromotor (1) umfaßt, dessen äußere Umhüllung (3) ein offenes Ende aufweist, das durch ein Zwischenelement (4) abgedeckt ist, das eine die Kohlebürsten für die Stromversorgung des besagten Motors tragende Halteplatte enthält, wobei sich das besagte Zwischenelement an das hohle Getriebegehäuse (2) anschließt, **dadurch gekennzeichnet,** daß mindestens eines der Metallsegmente (101) der Platte (100) über die besagte Platte (100) hinaus durch eine Zunge (72) verlängert wird, die in eine Öffnung des besagten Zwischenelements (4) eingesetzt und auf der die Kohlebürsten tragenden Halteplatte aufgelötet ist.

15. Getriebemotor nach einem der Ansprüche 10 bis 14, der einen Elektromotor zum Antrieb eines Kraftfahrzeug-Scheibenwischers mit zwei verschiedenen Geschwindigkeiten umfaßt, **dadurch gekennzeichnet,** daß zwei Metallsegmente (101a, 101b) der Platte (100) über die besagte Platte (100) hinaus jeweils durch eine Zunge (72a, 72b) verlängert werden, wobei jede der besagten Zungen in eine Öffnung des besagten Zwischenelements (4) eingesetzt und auf der die Kohlebürsten tragenden Halteplatte aufgelötet ist, so daß jede Zunge mit jeder der Kohlebürsten für die Stromversorgung des besagten Elektromotors für den Betrieb mit hoher und niedriger Geschwindigkeit elektrisch verbunden ist.
